(19) Europäisches Patentamt
European Patent Office
Office européen des brevets

(11) **EP 3 156 861 B1**

(12) **EUROPEAN PATENT SPECIFICATION**

(45) Date of publication and mention
of the grant of the patent:
**26.09.2018 Bulletin 2018/39**

(51) Int Cl.:
**G05B 17/02** $^{(2006.01)}$

(21) Application number: **15290262.3**

(22) Date of filing: **16.10.2015**

(54) **CONTROLLER FOR HYDROELECTRIC GROUP**

**STEUERUNG FÜR HYDROELEKTRISCHE GRUPPE**

**CONTRÔLEUR DE GROUPE HYDROÉLECTRIQUE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.04.2017 Bulletin 2017/16**

(73) Proprietor: **GE Renewable Technologies**
**38100 Grenoble (FR)**

(72) Inventors:
• **Gerwig, Simon**
**38000 Grenoble (FR)**
• **Sari, Bilal**
**38100 Grenoble (FR)**
• **Garin, Frederica**
**38400 St. Martin d'Hères (FR)**
• **Canudas de Witt, Carlos**
**38330 Saint Ismier (FR)**

(74) Representative: **Brannen, Joseph Waclaw et al**
**Global Patent Operation - Europe**
**GE International Inc.**
**The Ark**
**201 Talgarth Road**
**Hammersmith**
**London W6 8BJ (GB)**

(56) References cited:
**US-A- 4 287 429**

• **OUASSIMA AKHRIF ET AL: "Application of a
Multivariable Feedback Linearization Scheme for
Rotor Angle Stability and Voltage Regulation of
Power Systems", IEEE TRANSACTIONS ON
POWER SYSTEMS, IEEE SERVICE CENTER,
PISCATAWAY, NJ, US, vol. 14, no. 2, 1 May 1999
(1999-05-01), pages 620-628, XP011089431, ISSN:
0885-8950**

**Description**

TECHNICAL FIELD

The present invention generally relates to a new controller and a new control method for a hydraulic turbine and a synchronous generator, particularly to attenuate the effect of the vortex rope pressure oscillations on the active power. Within the purpose of the present invention, it was developed a multi-input multi-output linear mathematical model including the whole hydroelectric group: the turbine, the hydraulic system and the synchronous generator connected to a grid. In this model the pressure oscillations induced by the partial load vortex rope are represented by an exogenous input in the draft tube of the turbine. Unlike classical approaches it is considered both the hydraulic system and the electrical system during the controller design. As an example, it was designed a $H_{infinity}$ output feedback controller to attenuate the effect of the pressure oscillations on the active power transmitted to the grid. Simulation results show that the present invention is successful at reducing the oscillations on the active power while respecting the specification on the voltage.

BACKGROUND

Hydraulic turbines are very useful to support the electrical grid stability when the demand is quickly varying. They convert the potential energy of the water into rotating mechanical energy, which is then converted to electrical energy by the generator.

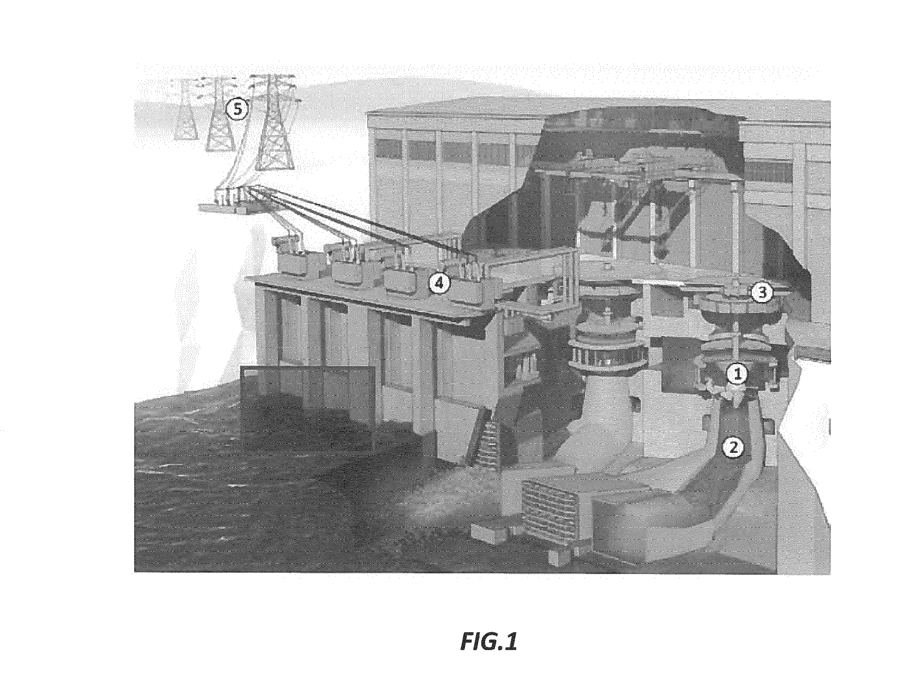

Fig.1 represents a multi-group hydroelectric power plant with a hydraulic turbine 1, a draft tube 2, a generator 3, a step-up transformer 4 and an electrical network (grid) 5. With the growing integration of intermittent renewable sources of electricity such as photovoltaic panels and wind turbines, hydroelectric power plants are an efficient way of supporting the grid but this leads to new challenges in their design and operation. Two of these challenges are a minimum time start-up of the turbine from standstill, and operating it at off-design conditions, such as partial load. According to the present invention, it is disclosed a novel control algorithm particularly for the operation at partial or full load.

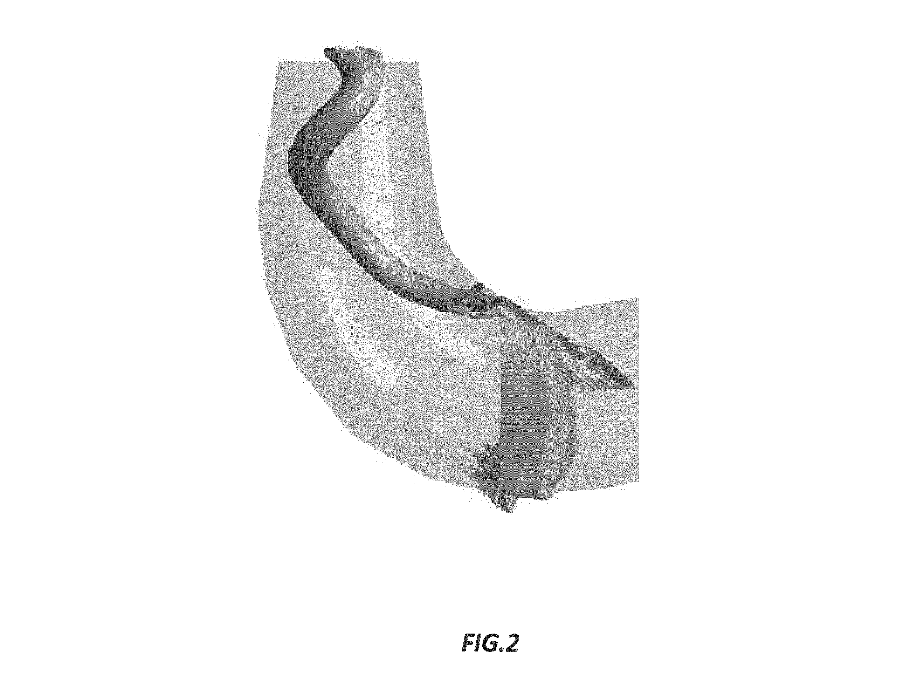

At partial load, more precisely when the flow through the turbine is a fraction of the optimal flow, reaction turbines exhibit a helical vortex rope in their draft tube resulting from the swirling flow exiting the runner, as shown in Fig.2.

The interaction of this vortex rope with the draft tube can lead to a pressure perturbation propagating in the entire hydraulic system with a frequency in the range of 0.2 to 0.4 the turbine rotational frequency [1]. The present invention addresses the technical disadvantages related to effects of the pressure perturbation on the produced electricity.

Indeed, these oscillations of pressure are converted in torque oscillations by the turbine and eventually in oscillations of active power transmitted to the network. In some cases, these oscillations of electric variables are unacceptable for operators because they don't comply with network specifications, described in the grid codes. These specifications of network operators describe the performances a power plant needs to have to be connected to the grid. The level of oscillations for the active power and voltage assume in this scenario a prominent relevance, as they need to be respected to avoid an excitation of the electrical grid modes of oscillation.

Traditionally, the control loop of the hydraulic turbine is decoupled from the excitation controller of the generator due to the difference in time response of the two subsystems, the generator having a faster response time. In the case of low frequency hydraulic oscillations, an interaction can appear between the hydraulic and electric subsystem thus worsening the oscillation. For this reason, the controller according to the present invention, advantageously, relies on both electrical and hydraulic subsystem as a whole.

BACKGROUND ART

Most of the work on the control of hydraulic turbine has been focused on developing algorithms to improve robust performance of the controllers. The two main challenges of a hydraulic turbine governor are the non-linearity's of the turbine characteristic and the unstable zeros [2], [3]. Several control designs have been proposed in the literature: optimal PID gain scheduling [4], adaptive algorithms [5], [6], robust control considering plant uncertainties [7], [8] and more recently robust PID design [9] where the robust performance of the PID controller is favourably compared to a more sophisticated $H_\infty$ controller. All these prior art references teach or suggest a linear model of the turbine, either a linearized model from the turbine characteristics [4], [7], [10] or an ideal model developed in [11].

Authors in [12] develop an approach of simultaneously controlling both the turbine wicket-gate opening and the generator excitation voltage. The design is based on an ideal nonlinear model of the turbine and a full 7-order nonlinear model of the synchronous machine to improve stability after large electrical transients, for example a short-circuit, or a lightning bolt.

The concept of damping inter area oscillations using a power system stabilizer (PSS) for synchronous generator has been used by authors in [13] to design a power system stabilizer using the hydro governor system. The resulting approach provides much better damping of the low frequency inter area oscillations during poor grid conditions.

Some authors have explored reducing the effect of the vortex rope on the electric power with the PSS on the synchronous generator only [14], [15]. While the active power oscillations originating from hydraulic pressure fluctuations are attenuated, they are amplified on the reactive power and the voltage.

Considering that the vortex rope hits the elbow of the draft tube in the centre of it, the authors in [1] model the turbine draft tube with two equal-length pipes and a pressure source in the centre. They develop this model to study the system stability when it is subject to the partial load vortex rope. The studied system consists of four hydro-electric groups connected to the electrical network.

## SUMMARY OF THE INVENTION

According to the present invention, it is proposed a controller, and a related method, configured to attenuate the active power oscillations of the hydroelectric group induced by pressure oscillations at partial or full load. First, the pressure perturbation created by the vortex rope is modelled as an exogenous perturbation using a model of the hydraulic subsystem where the draft tube is extracted from the turbine model [1]. Then from a linearized model of the hydraulic and electromechanical subsystems it is designed a $H_\infty$ controller with a proper choice of weighting functions and LMI (Linear Matrix Inequalities) optimization. The contribution of the present invention is that, advantageously, both the turbine wicket gate and the generator excitation voltage are controlled, unlike [14], [15] where only the generator excitation voltage was taken into account during the control design. Finally the resulting controller is experimented in simulation using the full non-linear model of the system in the simulation software package Simsen [16], this program has been validated by physical measurements.

In the simulations, it was found that the controller according to the invention is able to attenuate the perturbation effects on the active power and comply with the specifications.

## II. SYSTEM DESCRIPTION AND MATHEMATICAL MODEL

### A. System Physical Description

The system is a hydroelectric group consisting of an upstream reservoir providing water to a pump turbine through a penstock; the turbine yields mechanical power to a synchronous generator connected to an electrical grid. Some mathematical models of the pressure oscillations induced by the vortex rope have been developed in the hydraulic literature but they require a thorough study of the hydraulic system through measurements to determine , the equations parameters which vary with the operating conditions [17].

For the purpose of the present solution, it was used a model where the head oscillations are induced by an exogenous perturbation in the draft tube of the turbine [1]. The oscillations are represented by a sine function with only one frequency:

$$h_w = A_h \sin \omega_h t, \qquad\qquad (1)$$

where $h_\omega$ is the head perturbation in the draft tube in meters, $A_h$ is the amplitude of the perturbation in meters, $\omega_h$ its frequency in rad/s and t the time in seconds. With few prior on-site measurements, it is possible to determine $\omega_h$. The amplitude $A_h$ is difficult to estimate; with the controller according to the present invention this parameter is not needed. In this document, a specific physical system by Alstom for one of its clients was taken as a non-limiting example. The main specifications of the physical system can be found in Table I.

### B. Hydraulic Subsystem Mathematical Model

<u>Turbine</u>

The hydraulic turbine is represented by its so called hill charts that are built from laboratory tests [2].

TABLE I
PARAMETERS OF THE CONSIDERED SYSTEM

| | | |
|---|---|---|
| Rated active power | 130 | MW |
| Rotational speed | 136.36 | rpm |
| Rated head | 71 | m |
| Rated flow | 200 | $m^3$/s |

(continued)

PARAMETERS OF THE CONSIDERED SYSTEM

| Penstock length | 400 | m |
|---|---|---|
| Perturbation frequency | 0.5 | Hz |

They correspond to a non-linear mapping between the physical variables of the turbine. This mapping is represented in

$$Q = f_1(H_n, \Omega_r, \alpha)$$
$$T_m = f_2(H_n, \Omega_r, \alpha), \qquad (2)$$

where $Q$ is the flow through the turbine, $H_n$ the head difference between the inlet and the outlet of the turbine, $\Omega_r$ the rotational speed, $\alpha$ the guide vane opening and $T_m$ the mechanical torque produced by the turbine.

These equations can be linearized around an operating point ($Q_0$; $H_{n0}$; $\Omega_{r0}$; $\alpha_0$; $T_{m0}$) to obtain:

$$\Delta Q = \alpha_1 \Delta H_n + \alpha_2 \Delta \Omega_r + \alpha_3 \Delta \alpha$$
$$\Delta T_m = \beta_1 \Delta H_n + \beta_2 \Delta \Omega_r + \beta_3 \Delta \alpha, \qquad (3)$$

Where the $\alpha_i$; $\beta_i$ are the tangents of the hill chart at the considered operating point.

Pipes

The dynamics of the conduits (the penstock and the two draft-tube pipes) is described by the hyperbolic partial differential equations in

$$a^2 \frac{\partial Q}{\partial x} + gA \frac{\partial H}{\partial t} = 0$$
$$\frac{\partial Q}{\partial t} + gA \frac{\partial H}{\partial x} + \frac{f}{2DA} Q|Q| = 0. \qquad (4)$$

These equations may be discretize by using the finite elements: method, so the pipe may be considered to be made of $N_b$ pipe elements of length $dx = L/N_b$. The number of elements $N_b$ has to be arbitrary high to be as close as possible to reality. Applying (4) on this small element $i \in [1, N_b]$ and linearizing around an operating point ($H_0$; $Q_0$).

$$Q_{i+1} - Q_i + \sigma_1 \frac{dH_{i+1/2}}{dt} = 0$$
$$H_{i+1/2} - H_{i-1+1/2} + \sigma_2 \frac{dQ_i}{dt} + \sigma_3 Q_i = 0, \qquad (5)$$

TABLE II
HYDRAULIC NOTATIONS

| | |
|---|---|
| $Q(x,t)$ | Water flow in pipe at section $x$ and time $t$ (m³/s) |
| $H(x,t)$ | Water height at section $x$ and time $t$ (m) |
| $x$ | Linear abscissa along the pipe (m) |

(continued)

HYDRAULIC NOTATIONS

| | | |
|---|---|---|
| | $t$ | Time (s) |
| | $g$ | Acceleration of gravity = 9.81 m/s² |
| | $L$ | Pipe length (m) |
| | $A$ | Pipe area (m²) |
| | $D$ | Pipe diameter (m) |
| | $a$ | Wave propagation velocity = 1200 m/s |
| | $f$ | Head loss constant |

where

$$\sigma_1 = \frac{Ag\,\mathrm{d}x}{a^2}, \qquad \sigma_2 = \frac{\mathrm{d}x}{Ag}, \qquad \sigma_3 = \frac{f|Q_0|\,\mathrm{d}x}{2gDA^2}. \qquad (6)$$

Finally, the full model of a pipe discretized in $Nb$ elements:can be expressed by

$$\Lambda \frac{\mathrm{d}}{\mathrm{d}t} \begin{pmatrix} Q_1 \\ H_{1+1/2} \\ Q_2 \\ \vdots \\ Q_{N_b} \\ H_{N_b+1/2} \\ Q_{N_b+1} \end{pmatrix} + \Sigma \begin{pmatrix} Q_1 \\ H_{1+1/2} \\ Q_2 \\ \vdots \\ Q_{N_b} \\ H_{N_b+1/2} \\ Q_{N_b+1} \end{pmatrix} = \begin{pmatrix} H_{\mathrm{in}} \\ 0 \\ 0 \\ \vdots \\ 0 \\ 0 \\ -H_{\mathrm{out}} \end{pmatrix}, \qquad (7)$$

Where $\Lambda$ and $\Sigma$ are defined by

$$\Lambda = \begin{pmatrix} \frac{1}{2}l_{eq} & & & & & & \\ & \sigma_1 & & & & & \\ & & \sigma_2 & & (0) & & \\ & & & \ddots & & & \\ & (0) & & & \sigma_2 & & \\ & & & & & \sigma_1 & \\ & & & & & & \frac{1}{2}\sigma_2 \end{pmatrix}, \qquad (8)$$

$$\Sigma = \begin{pmatrix} \frac{1}{2}\sigma_3 & 1 & 0 & & & & \\ -1 & 0 & 1 & 0 & & & \\ 0 & -1 & \sigma_3 & 1 & 0 & & \\ & & & \ddots & & & \\ & & 0 & -1 & \sigma_3 & 1 & 0 \\ & & & & 0 & -1 & 0 & 1 \\ & & & & & 0 & -1 & \frac{1}{2}\sigma_3 \end{pmatrix}. \qquad (9)$$

<u>Full reduced-order hydraulic subsystem</u>: Preferably, forty elements are used for each pipe of the hydraulic system using (7) to have an acceptable accuracy, and these equations are combined with the turbine equations (2). This high order non-linear model is implemented in the software package Simsen [16] and will be used for numerical simulations.

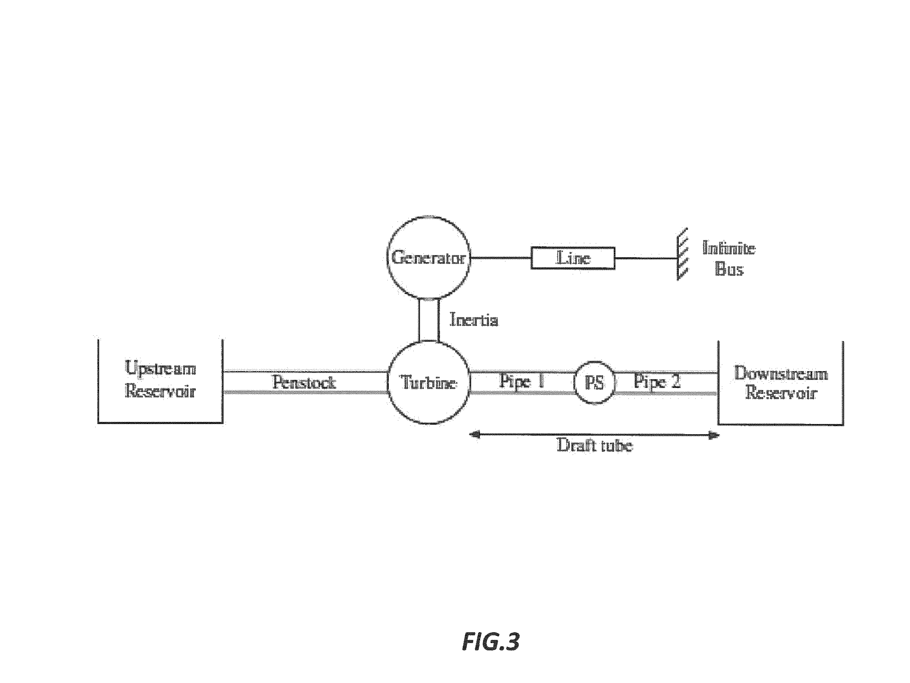

This model is linearized around the operating point $Q_0$=0.5 p.u. where the vortex rope is appearing. The head deviations at the upstream and downstream reservoir may be considered negligible and the external perturbation adds a difference in head between the outlet and the inlet of pipe 1 and pipe 2 respectively, see Fig.3.

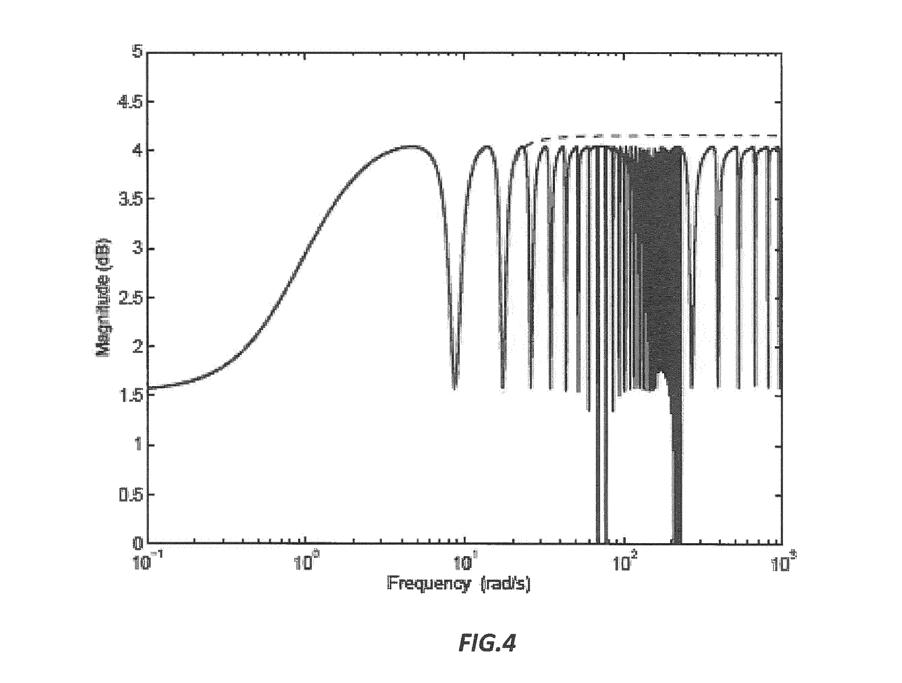

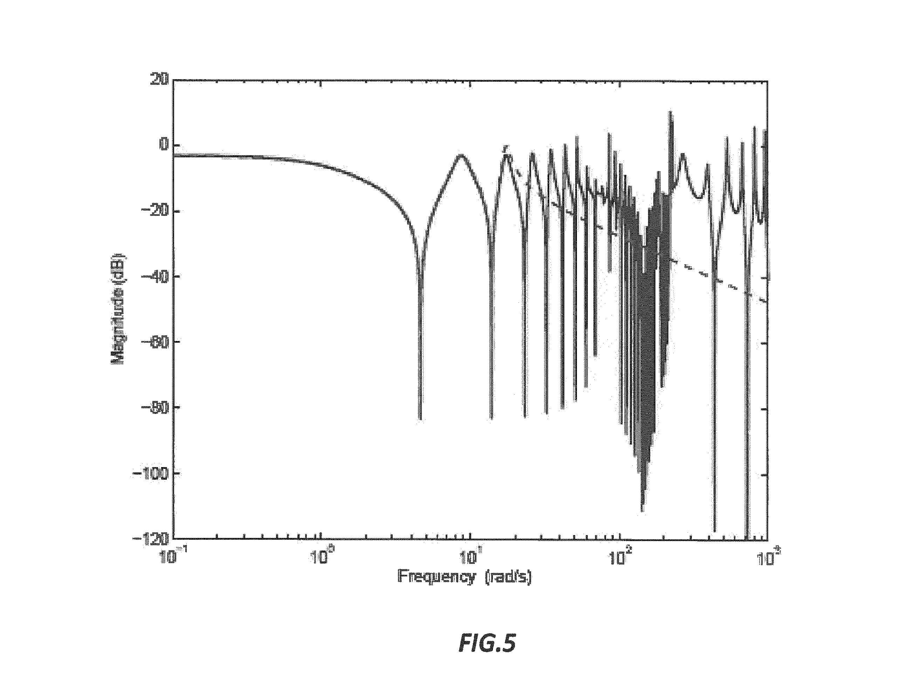

Then the order of the mathematical model is reduced to build a lower order mathematical model that will be used for the controller design. The physical system, where all the : numerical parameters were taken, has an actuator bandwidth limited to 5 Hz, and the perturbation frequency, $\omega_h$=0.5 Hz in (1). Therefore it was preferred to keep the poles and zeros of the system in this frequency region. Fig.4 shows the . Bode diagram comparison between the high order and the reduced order models for the transfer function between the control input and the mechanical torque $T_m$, while Fig.5 shows the Bode diagram comparison for the transfer function between the perturbation input $h_\omega$ and the mechanical torque $T_m$.

The resulting state-space hydraulic model is represented by

$$\dot{X}_h = A_h X_h + B_h \alpha + B_{he} \Omega_r + B_{hw} h_w$$
$$Y_h = T_m = C_h X_h + D_h \begin{pmatrix} \alpha \\ \Omega_r \end{pmatrix}, \qquad (10)$$

Where $X_h$ is the state vector, $\alpha$ the guide vane opening (control input), $\Omega_r$ the rotational frequency, $h_\omega$ the head perturbation from (1) and $Y_h$ the output. All these variables are deviations around an operating point.

The model reduction is based on assumptions of the physical system taken into account, and this :reduction is realized on numerical values. The matrix entries of $A_h$, $B_{he}$, $B_{hw}$, $C_h$ and $D_h$ can be found in Appendix A.

Electro-Mechanical Subsystem Mathematical Model

The generator and the electrical network are modelled as the well-known SMIB (Single Machine Infinite Bus) [3]. The third order non-linear model is linearized around an operating point ($P_{t0}$; $E_{t0}$; $Q_{t0}$). The resulting linear state-space system is described by

$$\dot{X}_e = A_e X_e + B_e \begin{pmatrix} \Delta T_m \\ \Delta E_{fd} \end{pmatrix} \qquad (11)$$
$$Y_e = C_e X_e.$$

Where the algebraic expressions of the variables are defined as follows:

$$X_e = \begin{pmatrix} \Delta \omega_r \\ \Delta \delta \\ \Delta \Psi_{fd} \end{pmatrix}, \qquad Y_e = \begin{pmatrix} \Delta \omega_r \\ \Delta P_t \\ \Delta Q_t \\ \Delta E_t \end{pmatrix},$$

$$A_e = \begin{pmatrix} a_{11} & a_{12} & a_{13} \\ a_{11} & 0 & 0 \\ 0 & a_{12} & a_{13} \end{pmatrix}, \qquad B_e = \begin{pmatrix} b_{11} & 0 \\ 0 & 0 \\ 0 & b_{32} \end{pmatrix}$$

$$C_e = \begin{pmatrix} 1 & 0 & 0 \\ 0 & c_{22} & c_{23} \\ 0 & c_{32} & c_{33} \\ 0 & c_{42} & c_{43} \end{pmatrix}$$

The three state variables are $\Delta\omega_r$ the speed deviation in per unit, $\Delta\delta$ the load :angle deviation and $\Delta\Psi_{fd}$ the field flux deviation. $\Delta T_m$ is the mechanical torque input provided by the turbine, $K_D$ the friction coefficient, $H$ the inertia constant in per unit (see Appendix B), $\omega_0 = 2\pi f_0$ where $f_0$ is the network frequency, $\Delta E_{fd}$ the: excitation voltage input (the controller output).

The four measured outputs are $\Delta Q_r$, deviation of active power, $\Delta Q_t$ deviation of reactive power and $\Delta E_t$ deviation of voltage.

The expressions of the $a_{ij}$, $b_{ij}$ and $c_{ij}$ constants and of the initial conditions can be found in Appendix B and the numerical values in Appendix A.

Full Hydroelectric Mathematical Model

Combining the equations of the hydraulic model (10) and the electro-mechanical model (11) leads to a state-space model of a hydroelectric group, named G(s), described in

$$\dot{x} = Ax + Bu + B_w h_w$$
$$y = Cx,$$

$$(12)$$

$$x = \begin{pmatrix} X_h \\ X_e \end{pmatrix}, \qquad y = Y_e, \qquad u = \begin{pmatrix} \alpha \\ E_{fd} \end{pmatrix}$$

Where the state vector x is a concatenation of the hydraulic state vector $X_h$ and the electric state vector $X_e$, the output: vector is the electric output vector $Y_e$ and $u$ the two control variables which are the guide vane opening $\alpha$ and the excitation voltage $E_{fd}$

TABLE III

STEP RESPONSE SPECIFICATIONS

| Active power | | Voltage | |
|---|---|---|---|
| $O_s$ | 30 % of $\Delta P$ | $O_s$ | 10 % of $\Delta E_t$ |
| $t_{90}$ | 25 s | $t_{63}$ | 0.8 s |
| $\varepsilon_s$ | 1 % of $P_{max}$ | $t_{\pm 5\%}$ | 5 s |
| Ramp error | error 10 % of $P_{max}$ | $\varepsilon_s$ | 0.2 % of $E_{tn}$ |

The concatenated matrices are defined as follows:

$$A = \begin{pmatrix} \begin{array}{cc|cc} & & 0 & 0 \\ A_h & & B_{he} & \vdots \; \vdots \\ & & 0 & 0 \\ \hline b_{11}C_h & & & \\ 0 \; \cdots \; 0 & & \tilde{A}_e & \\ 0 \; \cdots \; 0 & & & \end{array} \end{pmatrix},$$

$$\tilde{A}_e = A_e + \begin{pmatrix} b_{11}D_{h_2} & 0 & 0 \\ 0 & 0 & 0 \\ 0 & 0 & 0 \end{pmatrix},$$

$$B = \begin{pmatrix} & & & 0 \\ & B_h & & \vdots \\ & & & 0 \\ \hline & b_{11}D_{h_1} & 0 \\ & 0 & 0 \\ & 0 & b_{32} \end{pmatrix}, C = \begin{pmatrix} & 0_{4,7} & \Bigg| & C_e \end{pmatrix}$$

PROBLEM FORMULATION AND CONTROLLER DESIGN

According to an aspect, an objective of the controller according to the present invention is to reduce the effect of the pressure oscillations on the active power, without amplifying the oscillation of the voltage to a point where the specifications are not respected.

A. Specifications

Performance specifications that a hydraulic turbine for the active power and: a generator : for the voltage vary among network operators. As a non-limiting case, herewith detailed for exemplary purposes, it is chosen to extract, those specifications from technical requirements of one particular operator.

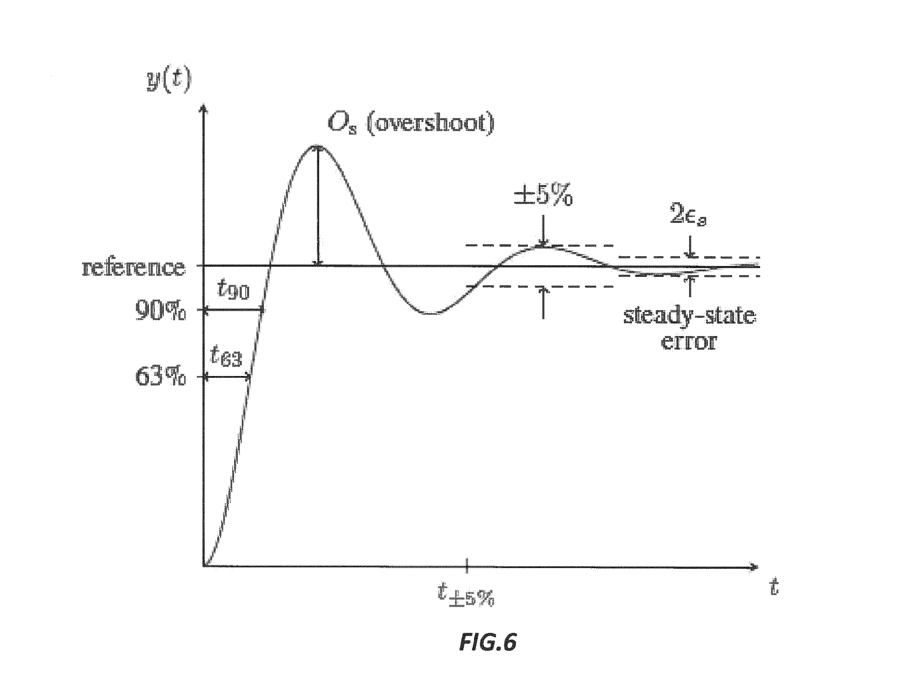

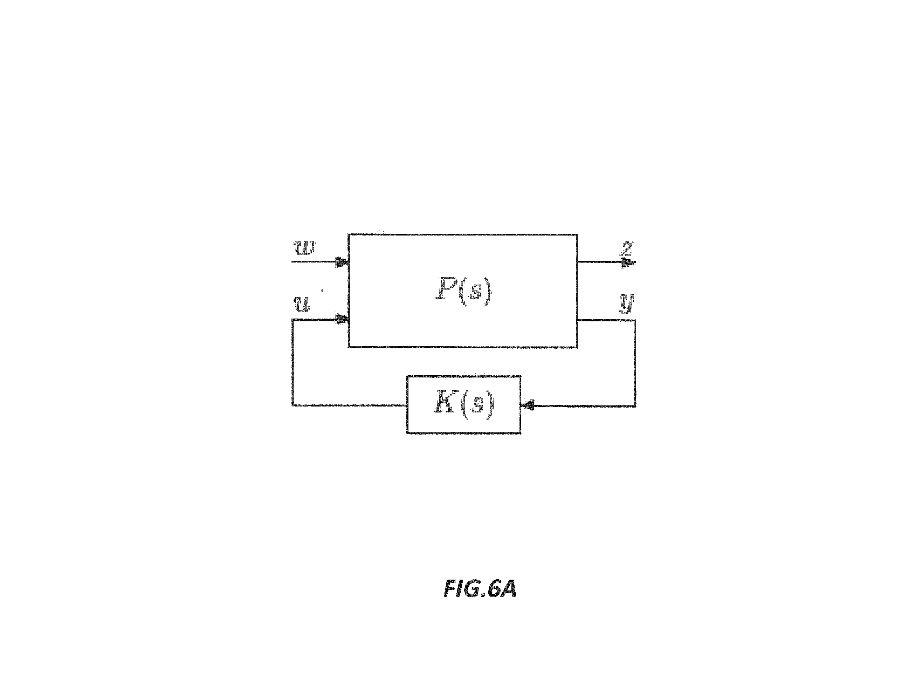

The specifications are given for the response to a step input for both active power and voltage, another specification of ramp error is given for the active power. The definitions of specification constants can be found in Fig.6 and the values associated with them in Table III for the active power and the voltage.

These specifications must be guaranteed in closed-loop even under the line impedance variation.

The exemplary embodiment of the invention herewith disclosed is focused on an existing system as discussed above, hence the specifications of attenuation for the external perturbation are linked to the physical values of it. The perturbation of this system is represented by a sine function of frequency 0.5 Hz. The amplitude of the oscillations is difficult to estimate because it is the result of a complex hydraulic phenomenon. Thus, it is selected an amplitude of the perturbation of 6 m that induces oscillations of the active power with a peak-to-peak amplitude of around 3.6% of $P_{max}$ which is superior to the 2% of the specifications.

It is: important to note that an important parameter for the controller according to the invention is the frequency of the oscillations and not the amplitude; indeed the controller is synthetized by adding damping to the system for a particular frequency range.

B. Control :Problem Formulation

It is now described : an exemplary and non-limiting method for synthetize the controller of the present invention.

As the objective is to minimize the influence of the exogenous perturbation $h_\omega$ on the electrical values $P_t$ and $E_t$ of the hydroelectric group, it is chosen the $H_\infty$ approach to synthetize the controller, presented here only for exemplary purposes, as other approaches may be possible as well.

Fig.6A depicts a simplified block diagram sketching the standard form problem or linear fractional transformation which is used to develop the controller. P(s) represents a mathematical model of the hydroelectric group, taking into account the above detailed equations G(s) (12) and some weighting functions $W_1(s)$ $W_2(s)$, $W_3(s)$ and $W_4(s)$ which will be explained later, and K(s) the controller according to the invention.

$\omega$ is the exogenous input vector (references, disturbances), $z$. the controlled output vector, $y$ the measurement vector and $u$ the control input vector.

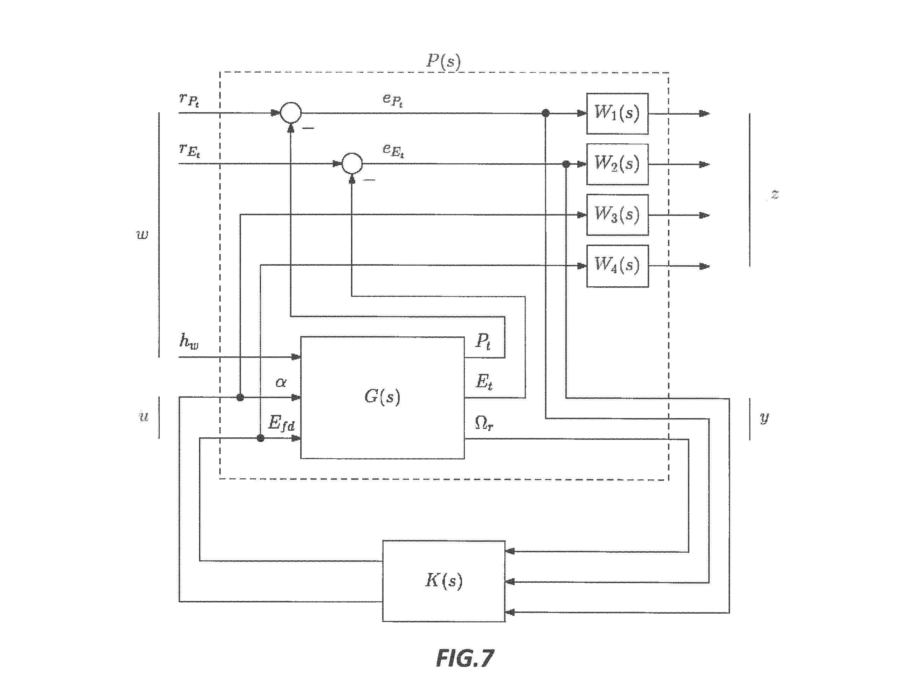

With reference to next figure 7, it is shown the block diagram of figure 6A with more details.

$T_{zw}(s)$ is defined as a closed-loop transfer matrix between the exogenous inputs $\omega$ and the controlled outputs $z$, and it is given by the relation

$$T_{zw}(s) = P_{zw}(s) + P_{zu}(s)K(s)(I - P_{yu}(s)K(s))^{-1}P_{yw}(s), \tag{13}$$

As shown in diagram 7, the mathematical model P(s) has two inputs, which are $\omega$ and $u$, an two outputs $z$ and $y$. Variables α and $E_{fd}$ calculated by the controller K(s). $r_{Pt}$ and $r_{Et}$ are references values of active power and voltage which are dictated by technical requirements and $h_\omega$ represents the perturbation with a given amplitude and frequency. Mathematical model G(S) calculates values $P_t$, $E_t$ and $\Omega_r$ which are active power, voltage and shaft rotational speed respectively.

Variances indicated as $e_{Pt}$ and $e_{Et}$ of calculated values $P_t$, $E_t$ versus reference values $r_{Pt}$, $r_{Et}$, are sent, together with the rotational speed $\Omega_r$, to the controller for a subsequent iteration. Moreover, said variances $e_{Pt}$ and $e_{Et}$ are sent together with input $u$ to weighting functions $W_n(s)$ for delivering controlled output $z$, as illustrated.

In the relation (13), $P_{zw}(s)$ indicates a sub-part of P(s) related: to a transfer function from the input $\omega$ to output $z$ (wherein s is the Laplace operator). Similarly, term $P_{yu}(s)$ indicates a sub-part of P(s) which takes :into account a transfer function from the input $u$ to output $y$. The same notation applies : to all other : terms in the relation (13).

I is the identity matrix of appropriate dimension.

The $H_\infty$ control problem can be then formulated as follows: finding a controller K(s) that stabilizes the hydroelectric group, modelled by P(s), such that:

$$\|T_{zw}(s)\|_\infty < \gamma \qquad\qquad (14)$$

Where $\|\cdot\|_\infty$ is the infinity norm and $\gamma > 0$ is a parameter.

As the infinity norm is peak value over the whole frequency range, by choosing a $\gamma$ small enough, the controller will minimize the effect of the exogenous inputs on the outputs. There are several algorithms to solve the problem described in (14), such as solving Riccati equations [18] or solving Linear Matrix Inequalities (LMI) [19].

In order to comply with the specifications (figure 6 and Table III), it is necessary to use weighting functions on the controlled outputs.

Some guidelines for selecting the general shapes of the weighting functions are disclosed in [20].

The structure used to specify the step response performance is described in:

$$W_{\text{step}}(s) = \frac{s/M_s + \omega_b}{s + \omega_b \epsilon_1}, \qquad\qquad (15)$$

where $M_s$ is the high frequency gain: of the corresponding closed-loop transfer function, $\omega_b$ the bandwidth with which the time response can be specified and $\epsilon_1$ (the steady-state error).

The second structure used to specify the damping of a sinusoidal perturbation is described by:

$$W_{\text{sinus}}(s) = \frac{s^2 + \alpha s + \omega_{0_{min}}\omega_{0_{max}}}{s^2 + \epsilon_{max}\alpha s + \omega_{0_{min}}\omega_{0_{max}}}. \qquad\qquad (16)$$

This filter provides damping for a family of sinusoidal signals centred on $\omega_0 = \sqrt{\omega_{0_{min}}\omega_{0_{max}}}$. Where $\epsilon_{max}$ is the desired gain of the closed-loop transfer function considered at $\omega_0$, and $\alpha$ is defined as:

$$\alpha = \frac{(\omega_{0_{max}} - \omega_{0_{min}})}{\epsilon}\sqrt{\frac{1-\epsilon^2}{1-\epsilon_{max}}};$$

where $\epsilon > \epsilon_{max}$ is the maximum gain of the closed-loop transfer function considered $\forall \omega \in [\omega_{0_{max}}, \omega_{0_{min}}]$.

In order to choose the weighting function numerical values the technical specifications are used together with some necessary knowledge of the hydroelectric group.

It was chosen, for the active power error, a product of a $W_{step}$, for the tracking and regulation specifications and $W_{sinus}$

to add damping at 0.5 Hz. For example, $M_s = 2$, $\omega_b = 0.35$, $\varepsilon_1 = 5 \times 10^{-3}$ and $\omega_{0min} = 2$, $\omega_{0max} = 4.93$, $\varepsilon = 0.95$ and $\varepsilon_{max} = 0.12$. Then, for the voltage error, only :a:weighting function of the shape $W_{step}$ was chosen for the tracking and regulation specifications whilst an additional $W_{sinus}$ term is not needed since the hydroelectric group already has enough damping at 0.5 Hz to comply with the specifications. In this instance, $M_s = 1$, $\omega_b = 10$ and $\varepsilon_1 = 5 \times 10^{-3}$

Usually :guidelines for the control inputs advise using high pass filters to limit the control at high frequencies, but here simpler static gains were chosen because they give good enough results, while avoiding an increase of the controller order. The chosen weighting functions for the block diagram of Fig.7 are:

$$W_1(s) = \frac{s + 0.7}{2s + 0.0035} \frac{s^2 + 0.97s + 9.86}{s^2 + 0.12s + 9.86},$$

$$W_2(s) = \frac{s + 10}{s + 0.05},$$

$$W_3(s) = 1,$$

$$W_4(s) = 0.01.$$

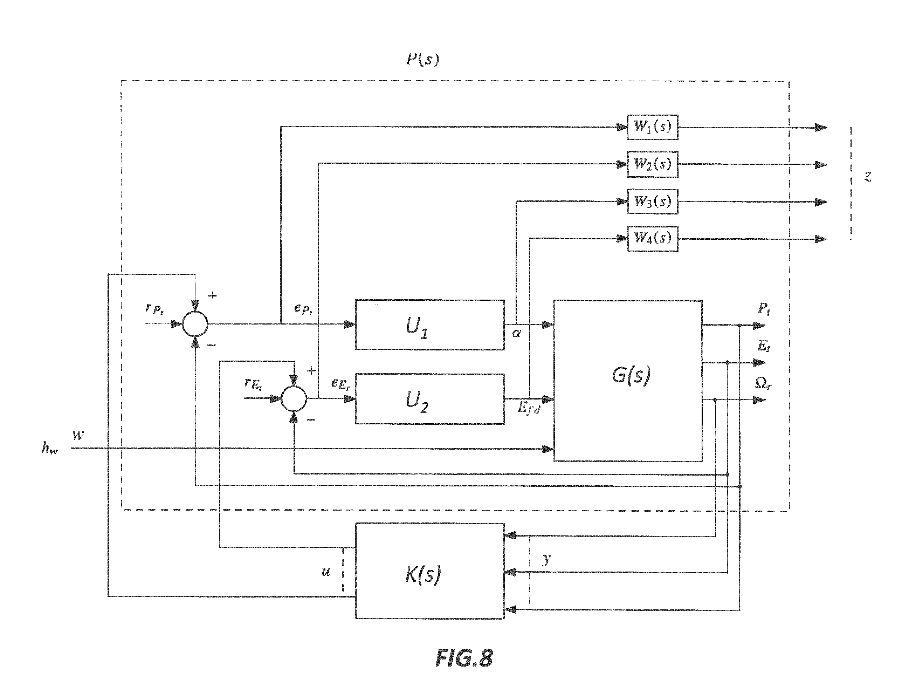

With reference now to following figure 8 it is represented a block diagram associated to an alternative method for synthetizing the controller K(s) according to the present invention. The block diagram of figure 8 is substantially equivalent to what already disclosed, with the difference that units $U_1$ and $U_2$ are included in the mathematical model P(s) and are configured to calculate :input values $\alpha$ and $E_{fd}$ respectively, which are fed to G(s), and the controller K(s) elaborates the input control variables $u$ which adjust the variances $e_{Pt}$ and $e_{Et}$ disclosed above.

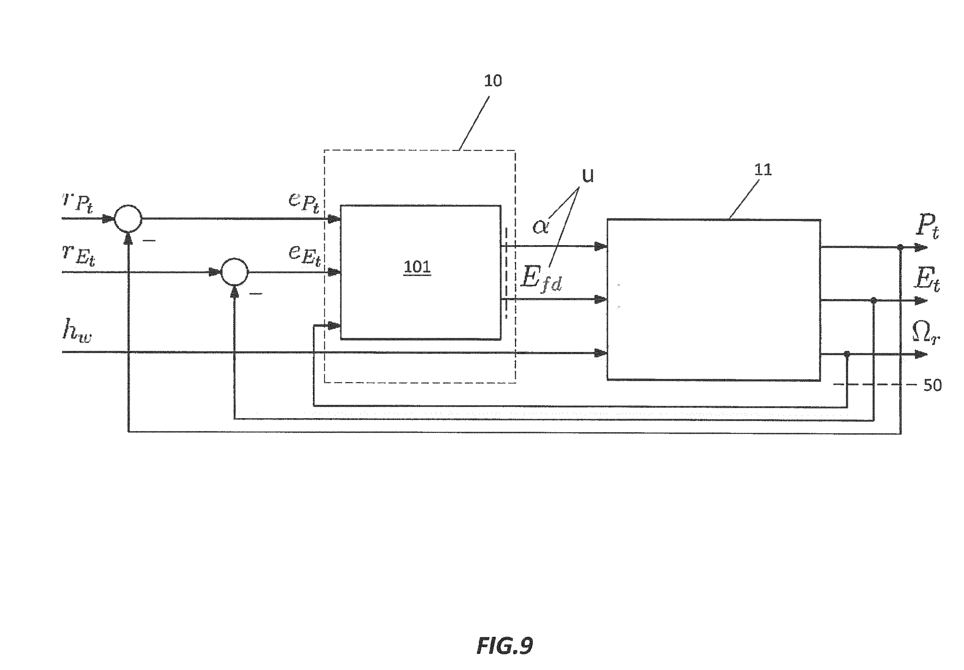

Turning to next figure 9, it is shown a block diagram depicting a functioning scheme of the controller according to the present invention associated to a physical hydroelectric group.

As seen in first figure 1, the hydroelectric group comprises a hydraulic subsystem which includes a turbine, a penstock and a draft tube pipe located respectively upstream and downstream the turbine. The hydroelectric group additionally comprises an electromechanical subsystem which includes a generator and an electrical network connected thereto.

The controller, depicted in the diagram by the dashed box 10, is configured to receive from a measuring unit (not shown), in a closed-loop fashion, an output signal 50 associated to electrical measured values of the hydroelectric group 11.

Specifically, the measured values include the active power $P_t$ and the voltage $E_t$ associated to the generator. The rotational velocity of the shaft $\Omega_r$ is also measured.

Controller 101 comprises a processor 101 which, based on said output signal 50, is configured to elaborate input control variables u which are in turn fed to the physical hydroelectric group 11. As explained above, the processor 101 elaborates: input control variables: $u$ based on the mathematical model G(s) of the hydroelectric group which combines equations modelling the hydraulic sub-system and equations modelling the electro-mechanical sub-system.

The input control variables include an angle $\alpha$ of a guide vane opening of the turbine and an excitation voltage $E_{fd}$ of the generator.

More specifically, the output signal 50 fed to the controller 10 include variances $e_{Pt}$, $e_{Et}$ of the measured electrical values $P_t$ and $E_t$ versus : reference respective values $r_{Pt}$ and $r_{Et}$.

In the embodiment depicted in figure 9, the output signal 50 is fed to the process 101 of the controller 10.

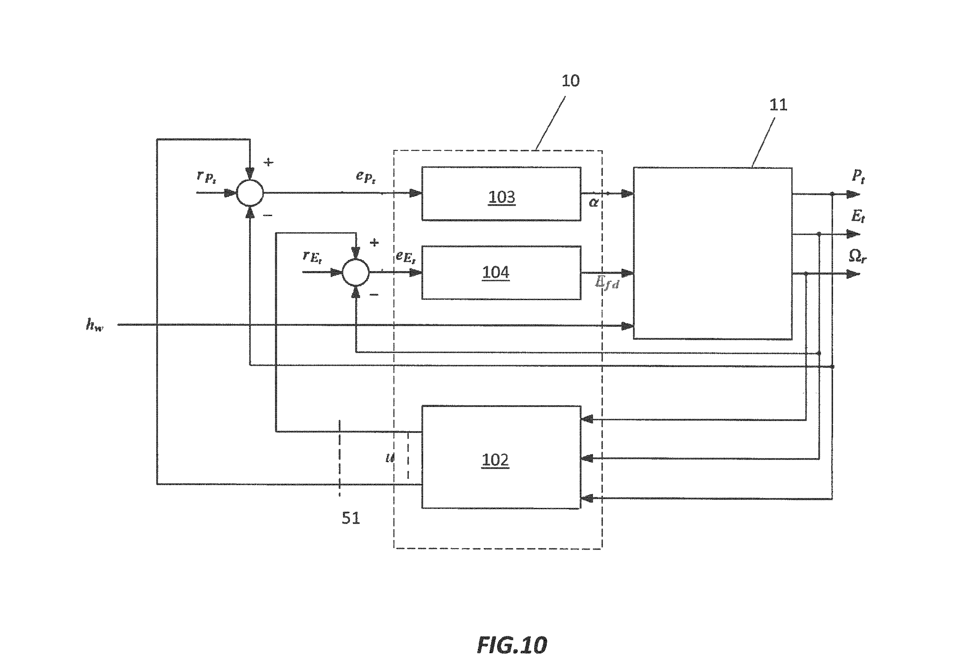

With reference to next figure 10, it is shown an alternative embodiment. In this alternative embodiment, controller 10 comprises a first control unit 103 configured to receive as input a first variance $\mathbf{e_{Pt}}$ of the measured active power $\mathbf{P_t}$ versus the reference value $r_{Pt}$ and to elaborate as output the control value $\alpha$; a second control unit 104 configured to receive as input a second variance $e_{Et}$ of the measured voltage $E_t$ versus the reference value $r_{Et}$ and to elaborate as output the control value $E_{fd}$. Controller 10 comprises a processor 102 which is configured to receive : as input the measured electrical values: $\mathbf{P_t}$ a $\mathbf{E_t}$ of the generator and return a signal 51 apt to adjust said first and second variances $\mathbf{e_{Pt}}$ and $\mathbf{e_{Et}}$. The processor 102 elaborates input signal 51 based on the mathematical model G(s) which models the hydroelectric group 11 combining equations associated to the hydraulic and electromechanical sub-systems.

Therefore, in this case, input variables u elaborated by the processor 102 are not the guide vane opening and the excitation voltage, but a correction value to modify the variances of the measured active power and voltage which are fed to the first control unit 103 and second control unit 104, respectively.

SIMULATION RESULTS

A. Comparison with Classical Controller

The controller according to the invention is simulated on a full non-linear model of the hydroelectric group described in Fig.1. The hydraulic subsystem is modelled with a high number of pipe elements in each pipe using (7), the turbine is represented by its nonlinear hill charts (2). To do this, a software package [16] was used which has been validated with on-site measurements to simulate the hydraulic sub-system. The generator mathematical model is the 7-th order non-linear model with damper windings along with the second order network model [3]. For the network model it was chosen to display the result with a value of $X_E$ = 0.3 because it leads to the highest oscillation amplitude for the voltage.

We compare the results with the classical controllers for the turbine and the synchronous generator which are designed separately to give good tracking and regulation performance, and are not intended to reduce the pressure oscillation effects.

The structure of the turbine controller is a proportional integral with optimized parameters, and the structure of the voltage controller is a lead-lag.

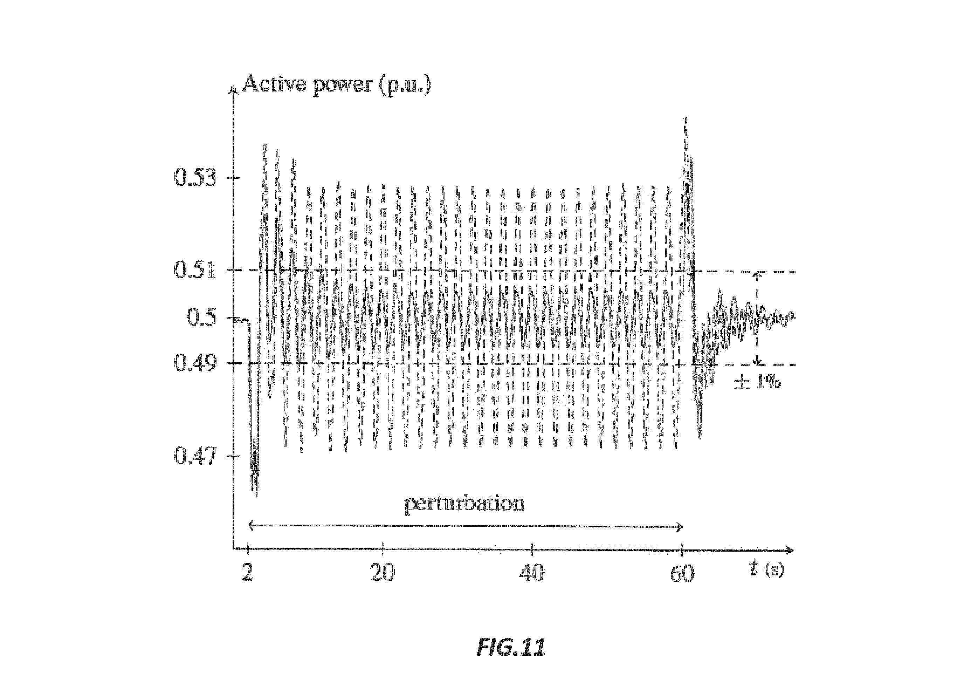

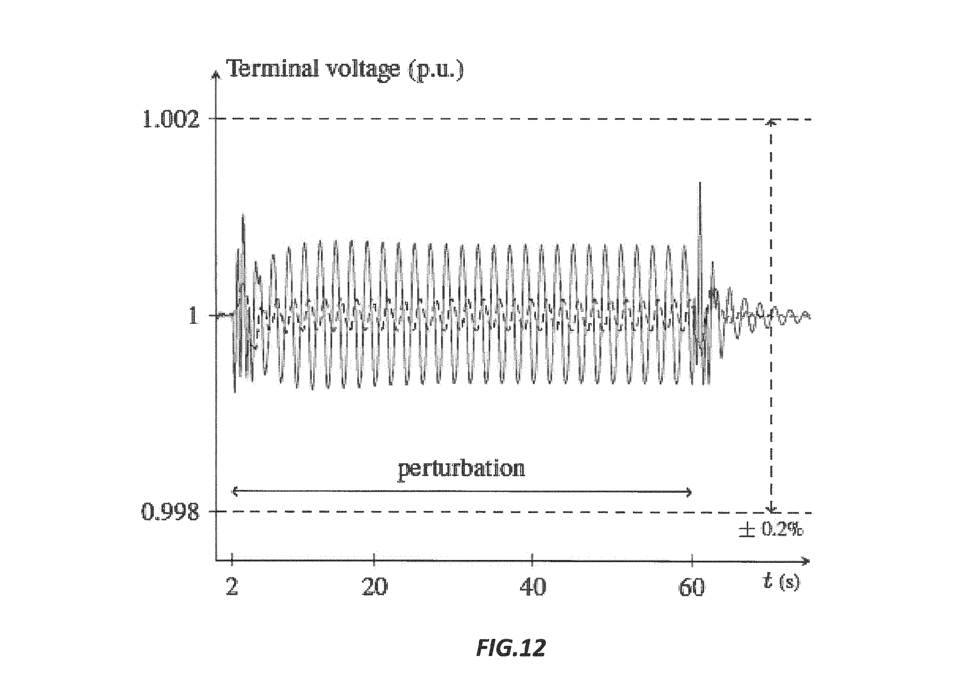

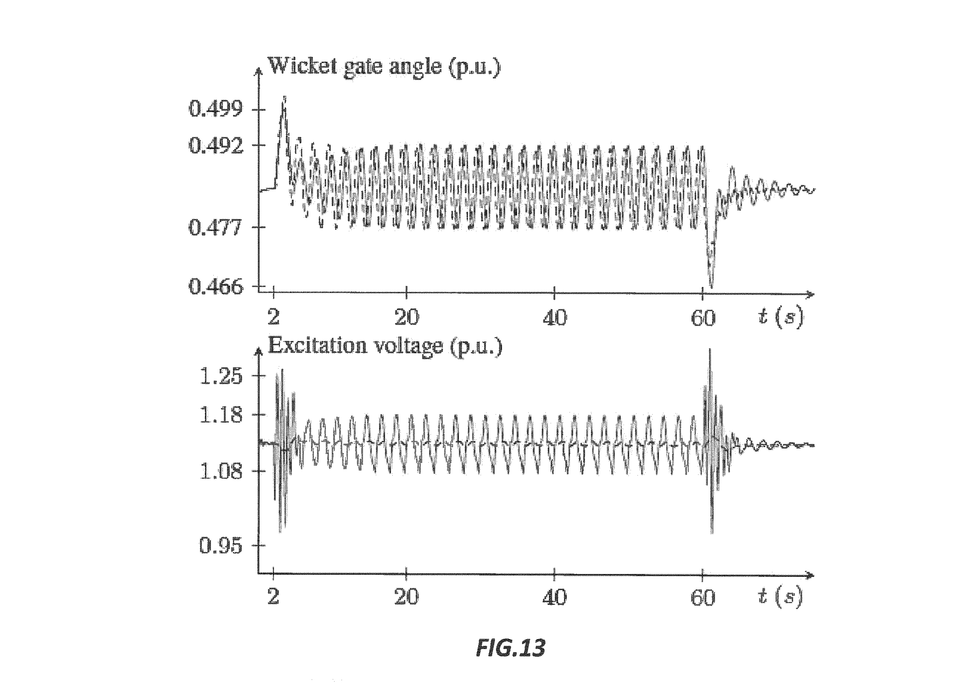

The initial conditions are $P_{t0}$ = 0.5 p.u., $E_{t0}$ = 1 p.u. and $Q_{t0}$ = 0 p.u., applying a sinusoidal : perturbation with an amplitude of 6 m and a frequency of 0.5 Hz between 2s and 60s of the simulation. The comparison between the classical (dashed line) and the controller according to the present invention (continuous line) for the active power is in Fig.11, for the voltage in Fig.12 and for the control inputs in Fig.13.

The simulation results show that the innovative controller allows attenuating the effect of the head perturbation created by the partial load vortex rope. The oscillations of active power are kept under 1% of maximum active power while the voltage oscillations are also under 0.2% of nominal voltage. The peak-to-peak amplitude of the control needed for the guide vane opening is 0.54 degrees which is quite small and given the frequency (0.5 Hz) should be realizable with physical actuators (hydraulic cylinders). The same can be said for the excitation voltage oscillating between 1.08 and 1.18 p.u..

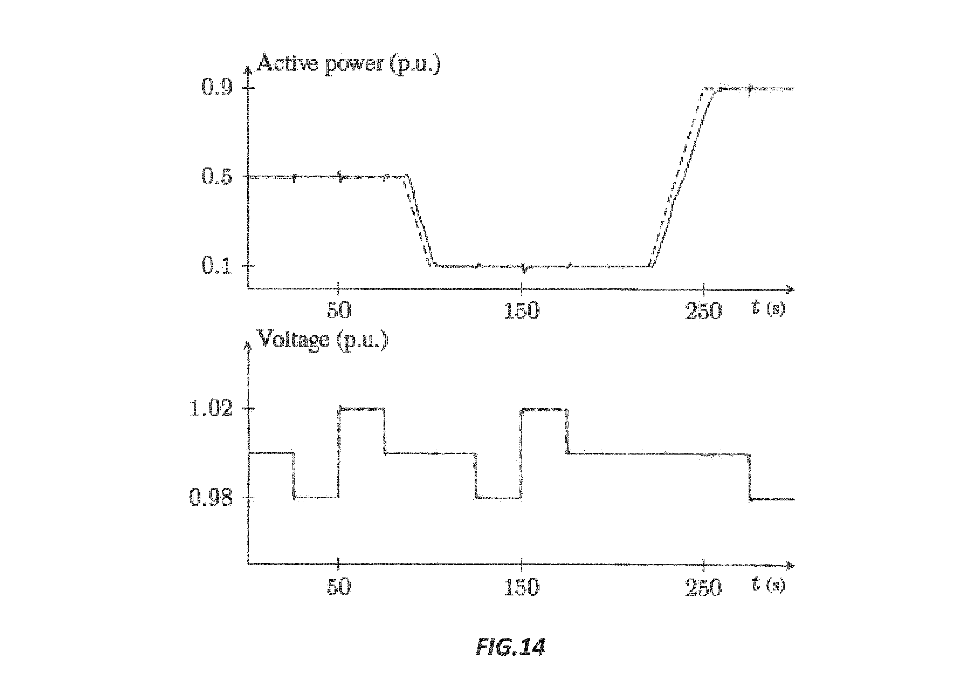

In order to verify that the controller according to the invention does not deteriorate the tracking performances of the system, an active power ramp reference of 2.7% per second and voltage steps of 2% is applied. The results of the simulation are plotted in Fig.14 (dashed line is the reference whilst the continuous line plots the controller according to the invention).

It will be appreciated that the controller allows the system to be stable for all operating points and to comply with the tracking performance specifications.

As a conclusion, it is successfully developed an innovative controller for both the turbine wicket gate opening and the generator excitation voltage which attenuates the effect of a pressure perturbation in the turbine draft tube on the active power.

TABLE IV
HYDRAULIC NUMERICAL VALUES

| Penstock | Pipe 1 & 2 | Turbine | |
|---|---|---|---|
| $L$ = 400 m | $L$ = 13 m | $\alpha_1$ = 0.39 | $\beta_1$ = 1.11 |
| | $N_b$ = 40 | $\alpha_2$ = 1.34 | $\beta_2$ = 1.36 |
| | $D$ = 7.90 m | $\alpha_3$ = -1.64 | $\beta_3$ = -11.29 |
| | $f$ = $10^{-2}$ | $\gamma_{max}$ = 35.5° | |

This allows the operation of the hydroelectric group at partial loading of the turbine where a vortex rope builds up in the draft tube without compromising the quality of the electrical power produced and complying with tight network specifications.

**APPENDIX A**

NUMERICAL VALUES

A. Hydraulic Subsystem

The hydraulic subsystem is linearized around the operating point $T_{m0}$ = 0.5 p.u. with the parameters given in Table IV. The numerical values of the matrices of (10) are given here:

$$A_h =$$

$$\begin{pmatrix} -0.81 & 13.1 & -7.4 & 0.52 & 1.1 & 5.1 & 5.8 \\ -12.9 & -1.0 & 3.1 & 1.8 & 5.2 & 4.0 & -1.7 \\ 7.6 & -3.4 & -0.59 & 22.1 & 5.4 & 6.1 & 2.1 \\ -0.7 & -1.8 & -22.2 & -0.77 & 4.1 & -8.4 & -2.8 \\ -0.94 & -5.2 & -5.0 & -3.8 & -1.2 & 4.6 & -4.3 \\ -5.3 & -4.2 & -6.1 & 8.6 & -4.9 & -1.1 & -1.2 \\ -6.2 & 2.0 & -2.9 & 3.0 & 4.4 & 1.1 & -1.1 \end{pmatrix}$$

$$B_h = \begin{pmatrix} -0.33 \\ -0.99 \\ 0.18 \\ -1.6 \\ 1.2 \\ -1.0 \\ -2.8 \end{pmatrix} \quad B_{he} = \begin{pmatrix} 0.027 \\ 1.1 \\ -0.68 \\ 1.9 \\ -1.1 \\ 0.92 \\ 2.9 \end{pmatrix} \quad B_{hw} = \begin{pmatrix} -0.15 \\ -0.14 \\ -0.10 \\ 0.040 \\ -0.50 \\ 0.10 \\ 0.40 \end{pmatrix}$$

$$C_h = \begin{pmatrix} 1.4 & -2.0 & 1.9 & -3.5 & 2.8 & -0.93 & -5.2 \end{pmatrix}$$

$$D_h = \begin{pmatrix} -2.3 & -4.6 \end{pmatrix}$$

B. Electrical Subsystem

The electrical subsystem is linearized around the operating point $P_{t0} = 0.5$ p.u., $E_{t0} = 1$ p.u. and $Q_{t0} = 0$ p.u.

The matrices of (11) are expressed below.

$$A_e = \begin{pmatrix} 0 & -0.18 & -0.11 \\ 314 & 0 & 0 \\ 0 & -0.073 & -0.27 \end{pmatrix} \quad B_e = \begin{pmatrix} 0.16 & 0 \\ 0 & 0 \\ 0 & 0.13 \end{pmatrix}$$

$$C_e = \begin{pmatrix} 1 & 0 & 0 \\ 0 & 1.10 & 0.69 \\ 0 & 0.14 & 1.39 \\ 0 & -0.0044 & 0.40 \end{pmatrix}$$

With the synchronous machine parameter numerical values detailed in Table V.

**TABLE V**

| ELECTRICAL NUMERICAL VALUES | |
|---|---|
| $X_{ds} = 0.971$ | $L_t = 0.175$ |
| $X_{qs} = 0.682$ | $R_a = 2.58 \times 10^{-3}$ |
| $L_{adu} = 0.918$ | $X'_{ds} = 0.277$ |
| $L_{ads} = 0.796$ | $L_{aqs} = 0.507$ |
| $L_{fd} = 0.155$ | $R_{fd} = 3.92 \times 10^{-4}$ |
| $X_E = 0.3$ | $R_E = 0.03$ |

**APPENDIX B**

ELECTRO-MECHANICAL MODEL

In this section, we define the matrices of the electromechanical state-space model as well as the expressions to calculate the initial conditions of the machine. Table VI is the nomenclature of all electro-mechanical variables.

A. Matrix Constants

The expressions for the matrix constants of (11) [3] are developed as follows:

$$a_{11} = -\frac{K_D}{2H} \qquad a_{12} = -\frac{K_1}{2H} \qquad a_{13} = -\frac{K_2}{2H}$$

$$a_{21} = \omega_0 = 2\pi f_0$$

$$a_{32} = -\frac{\omega_0 R_{fd}}{L_{fd}} m_1 L'_{ads}$$

$$a_{33} = -\frac{\omega_0 R_{fd}}{L_{fd}} \left[ 1 - \frac{L'_{ads}}{L_{fd}} + m_2 L'_{ads} \right]$$

$$R_T = R_a + R_E$$
$$X_{T_q} = X_E + (L_{aqs} + L_l) = X_E + X_{qs}$$
$$X_{T_d} = X_E + (L'_{ads} + L_l) = X_E + X'_{ds}$$
$$D = R_T^2 + X_{T_q} X_{T_d}$$

$$L'_{ads} = \frac{1}{\frac{1}{L_{ads}} + \frac{1}{L_{fd}}} \qquad (17)$$

$$b_{11} = \frac{1}{2H} \qquad b_{32} = \frac{\omega_0 R_{fd}}{L_{adu}}$$

$$c_{22} = n_1(\Psi_{ad0} + L_{aqs} i_{d0} - R_a i_{q0}) - m_1(\Psi_{aq0} + L'_{ads} i_{q0} + R_a i_{d0})$$

$$c_{23} = n_2(\Psi_{ad0} + L_{aqs} i_{d0} - R_a i_{q0}) - m_2(\Psi_{aq0} + L'_{ads} i_{q0} + R_a i_{d0}) + \frac{L'_{ads}}{L_{fd}} i_{q0}$$

$$c_{32} = m_1(\Psi_{ad0} - (L_l + L'_{ads}) i_{d0}) + n_1(\Psi_{aq0} - (L_l + L_{aqs}) i_{q0})$$

$$c_{33} = m_2(\Psi_{ad0} - (L_l + L'_{ads}) i_{d0}) + n_2(\Psi_{aq0} - (L_l + L_{aqs}) i_{q0}) + \frac{L'_{ads}}{L_{fd}} i_{d0}$$

$$c_{42} = \frac{e_{d0}}{E_{t0}}(-R_a m_1 + L_l n_1 + L_{aqs} n_1) + \frac{e_{q0}}{E_{t0}}(-R_a n_1 + L_l m_1 + L'_{ads} m_1)$$

$$c_{43} = \frac{e_{d0}}{E_{t0}}(-R_a m_2 + L_l n_2 + L_{aqs} n_2) + \frac{e_{q0}}{E_{t0}}\left(-R_a n_2 + L_l m_2 + L'_{ads}\left[\frac{1}{L_{fd}} - m_2\right]\right)$$

$$K_1 = n_1(\Psi_{ad0} + L_{aqs} i_{d0}) - m_1(\Psi_{aq0} + L'_{ads} i_{q0})$$

$$K_2 = n_2(\Psi_{ad0} + L_{aqs}i_{d0}) - m_2(\Psi_{aq0} + L'_{ads}i_{q0})$$
$$+ \frac{L'_{ads}}{L_{fd}}i_{q0}$$

$$m_1 = \frac{E_B(X_{T_q}\sin\delta_0 - R_T\cos\delta_0)}{D}$$

$$n_1 = \frac{E_B(R_T\sin\delta_0 + X_{T_d}\cos\delta_0)}{D}$$

$$m_2 = \frac{X_{T_q}}{D}\frac{L_{ads}}{(L_{ads} + L_{fd})}$$

$$n_2 = \frac{R_T}{D}\frac{L_{ads}}{(L_{ads} + L_{fd})}$$

B. Initial Conditions

$P_{t0}$, $Q_{t0}$ and $E_{t0}$ at the operating point are fixed and the following expressions are used to compute the initial conditions [3].

$$I_t = \frac{\sqrt{P_t^2 + Q_t^2}}{E_t}$$

$$\Phi = \cos^{-1}\left(\frac{P_t}{E_t I_t}\right)$$

$$\delta_i = \tan^{-1}\left(\frac{X_{qs}I_t\cos\Phi - R_a I_t\sin\Phi}{E_t + R_a I_t\cos\Phi + X_{qs}I_t\sin\Phi}\right)$$

$$e_{d0} = E_t\sin\delta_i$$

$$e_{q0} = E_t\cos\delta_i$$

$$i_{d0} = I_t\sin(\delta_i + \Phi)$$

$$i_{q0} = I_t\cos(\delta_i + \Phi)$$

$$E_{Bd0} = e_{d0} - R_E i_{d0} + X_E i_{q0}$$

$$E_{Bq0} = e_{q0} - R_E i_{q0} - X_E i_{d0}$$

$$\delta_0 = \tan^{-1}\left(\frac{E_{Bd_0}}{E_{Bq_0}}\right)$$

$$E_{B_0} = \sqrt{E_{Bd_0}^2 + E_{Bq_0}^2}$$

$$i_{fd_0} = \frac{e_{q_0} + R_a i_{q_0} + L_{ds} i_{d_0}}{L_{ads}}$$

$$E_{fd_0} = L_{adu} i_{fd_0}$$

$$\Psi_{ad_0} = L_{ads}(-i_{d_0} + i_{fd_0})$$

$$\Psi_{aq_0} = -L_{aqs} i_{q_0}$$

TABLE VI
NOMENCLATURE

| | |
|---|---|
| $P_t, Q_i$ | Active and reactive powers transmitted to the grid at machine terminals (p.u) |
| $E_t, I_t$ | Voltage and current at machine terminals (p.u.) |
| $\Phi$ | Power factor (rad) |
| $\delta_i$ | Internal angle (rad) |
| $e_d, e_q$ | Terminal voltage d, q-axis components (p.u.) |
| $i_d, i_q$ | Terminal voltage d, q-axis components (p.u.) |
| $E_{Ed}, E_{Bq}$ | Bus voltage d, q-axis components (p.u.) |
| $\delta$ | Load angle (rad) |
| $E_B$ | Bus voltage (p.u.) |
| $i_{fd}$ | Rotor field current (p.u.) |
| $E_{fd}$ | Exciter output voltage (p.u.) |
| $\Psi_{ad}, \Psi_{aq}$ | d, q-axis flux linkage (p.u.) |
| $X_{ds}, X_{qs}$ | d, q-axis saturated reactances (p.u.) |
| $R_a$ | Stator resistance (p.u.) |
| $L_{adu}$ | Unsaturated mutual inductance in d-axis (p.u.) |
| $L_{ads}$ | Saturated mutual inductance in d-axis (p.u.) |
| $X_E, R_E$ | Line reactance and resistance (p.u.) |
| $L_{fd}$ | Rotor field leakage inductance (p.u.) |
| $R_{fd}$ | Rotor field resistance (p.u.) |
| $L_i$ | Leakage inductance (p.u.) |
| $X'_{ds}$ | Transient d-axis saturated reactance (p.u.) |

REFERENCES

[1] C. Nicolet, J.-J. Herou, B. Greiveldinger, P. Allenbach, J.-J. Simond, and F. Avellan, "Methodology for risk assessment of part load resonance in Francis turbine power plant, " in Proceedings IAHR Int. Meeting of WG on Cavitation and Dynamic Problems in Hydraulic Machinery and Systems, June 2006.
[2] M. H. Chaudhry, Applied Hydraulic Transients. Springer Verlag New York Inc., 2014.
[3] P. Kundur, Power System Stability and Control. New York: McGraw-Hill, 1994.

[4] G. Orelind, L. Wozniak, J. Medanic, and T. Whittemore, "Optimal PID gain schedule for :hydrogenerators - design and application," Energy Conversion, IEEE Transactions on, vol. 4, no. 3, September 1989.

[5] J. Lansberry and L. Wozniak, "Adaptive hydrogenerator governor tuning with a genetic algorithm," Energy Conversion, IEEE Transactions on, vol. 9, no. 1, March 1994.

[6] O. Malik and Y. Zeng, "Design of a robust adaptive controller for a water turbine governing system," Energy Conversion, IEEE Transactions on, vol. 10, no. 2, June 1995.

[7] J. Jiang, "Design of an optimal robust governor for hydraulic turbine generating units," Energy Conversion, IEEE Transactions on, vol. 10, no. 1, March 1995.

[8] I. Eker and M. Tumay, "Robust multivariable-cascade governors for hydroturbine controls," Electrical Engineering, vol. 84, no. 4, July 2002.

[9] K. Natarajan, "Robust PID controller design for hydroturbines," Energy Conversion, IEEE Transactions on, vol. 20, no. 3, pp. 661-667, September 2005.

[10] J. Lansberry, L. Wozniak, and D. Goldberg, "Optimal hydrogenerator governor tuning with a genetic algorithm," Energy Conversion, IEEE Transactions on, vol. 7, Deemberc 1992.

[11] "Hydraulic turbine and turbine control : models for system dynamic studies," Power Systems, IEEE Transactions on, vol. 7, no. 1, February 1992.

[12] O. Akhrif, F.-A. Okou, L.-A. Dessaint, and R. Champagne, "Application of a multivariable feedback linearization scheme for rotor angle stability and voltage regulation of power systems," Power Systems, IEEE Transactions on, vol. 14, no. 2, pp. 620-628, May 1999.

[13] M. Weixelbraun, H. Renner, O. Kirkeluten, and S. Lovlund, "Damping low frequency oscillations with hydro governors," in PowerTech (POWERTECH), 2013 IEEE Grenoble, June 2013, pp. 1-6.

[14] J. Mallik, "Reducing the effect of vortex rope oscillation on hydro units by power system stabilizer designed using genetic algorithm," in India Conference (INDICON), 2011 Annual IEEE, December 2011, pp. 1-4.

[15] A. Padoan, B. Kawkabani, A. Schwery, C. Ramirez, C. Nicolet, J.- J. Simond, and F. Avellan, "Dynamical behaviour comparison between variable speed and synchronous machines with PSS," Power Systems, IEEE Transactions on, vol. 25, no. 3, August 2010.

[16] C. Nicolet, F. Avellan, P. Allenbach, A. Sapin, and J. Simond, "New tool for the simulation of transient phenomena in Francis turbine power plants," in Proceedings of the Hydraulic Machinery and Systems 21st IAHR Symposium, September 2002.

[17] P. K. Doerfler, "Evaluating 1D models for vortex-induced pulsation in Francis turbines," in 3rd IAHR International Meeting of the Workgroup on Caviation and Dynamic Problemes in Hydraulic Machinery and Systems, October 2009.

[18] J. Doyle, K. Glover, P. Khargonekar, and B. Francis, "State-space solutions to standard : H2 and H1 control problems," Automatic Control, IEEE Transactions on, vol. 34, no. 8, pp. 831-847, August 1989.

[19] T. Iwasaki and R. Skelton, "All controllers for the general H1- control problem: LMI existence conditions and state space formulas," Automatica, vol. 30, no. 8, pp. 1307-1317, 1994.

[20] K. Zhou and J. C. Doyle, Essentials Of Robust Control. Prentice Hall, 1999.

**Claims**

1. Controller (10) for hydroelectric group (11), the hydroelectric group (11) comprising:

    a hydraulic sub-system including a turbine (1), a penstock and a draft tube pipe (2) located respectively upstream and downstream the turbine (1); and
    an electromechanical sub-system comprising a generator (3) and an electrical network (5) connected thereto; wherein the controller (10) is configured to receive from a measuring unit, in a closed-loop fashion, an output signal (50) associated to electrical measured values of the hydroelectric group (11) and elaborate input control variables **u** to be fed to the hydroelectric group (11), and further comprising a processor (101; 102) configured to elaborate said input control variables **u** based on a mathematical model G(s) of the hydroelectric group (11) which combines equations modelling the hydraulic sub-system and equations modelling the electro-mechanical sub-system;
    **characterised in that**,
    said mathematical model of the hydroelectric group (11) is described by the relation:

$$\dot{x} = Ax + Bu + B_w h_w$$

$$y = Cx,$$

$$x = \begin{pmatrix} X_h \\ X_e \end{pmatrix}, \qquad y = Y_e, \qquad u = \begin{pmatrix} \alpha \\ E_{fd} \end{pmatrix}$$

wherein $h_w$ is the head perturbation in the draft tube, alpha is the angle of a guide vane opening of the turbine, $E_{fd}$ is the excitation voltage of the generator, $x$ is a state vector which concatenates a hydraulic state vector $X_h$ and an electric state vector $X_e$, $y$ is an electric output vector $Y_e$, $u$ are the input control variables and A, B and $B_\omega$ concatenated matrices.

2. Controller (10) according to claim 1, wherein said electrical measured values of the hydroelectric group (11) include an active power $P_t$ and a voltage $E_t$ of the generator (3) .

3. Controller (10) according to claim 1 or 2, wherein the input control variables $u$ comprise an angle $\alpha$ of a guide vane opening of the turbine (1) and an excitation voltage $E_{fd}$ of the generator (3).

4. Controller (10) according to claim 3, wherein said output signal (50) include variances of the measured electrical values of the active power $P_t$ and the voltage $E_t$ of the generator (3) versus respective reference values $r_{Pt}$ and $r_{Et}$.

5. Controller (10) according to claim 4, wherein said output signal (50) is fed to said processor (101).

6. Controller (10) according to claim 4, further comprising:

a first control unit (103) configured to receive as input a first variance $e_{Pt}$ of the measured active power $P_t$ versus the reference value $r_{Pt}$ and to elaborate as output said control value $\alpha$;
a second control unit (104) configured to receive as input a second variance $e_{Et}$ of the measured voltage $E_t$ versus the reference value $r_{Et}$ and to elaborate as output said control value $E_{fd}$,
wherein said processor (102) is configured to receive as input said measured electrical values $P_t$ a $E_t$ of the generator and return a signal apt to adjust said first and second variances $e_{Pt}$ and $e_{Et}$.

7. Hydroelectric group (11) *characterised in that* it comprises a controller (10) according to any of the preceding claims.

8. Method for controlling an electrical output of a hydroelectric group (11), the hydroelectric group (11) comprising:

a hydraulic sub-system including a turbine (1), a penstock and a draft tube pipe (2) located respectively upstream and downstream the turbine (1);
an electromechanical sub-system comprising a generator (3) and an electrical network (5) connected thereto; and
a controller (10);
the method including measuring electrical values of the hydroelectric group (11), and elaborating input control variable $u$ to be fed, in a closed-loop fashion, to the hydroelectric group (11), *wherein* the elaboration of said output control variables $u$ is based on a mathematical model G(s) of the hydroelectric group which combines equations modelling the hydraulic sub-system and equations modelling the electro-mechanical sub-system;
**characterised in that**,
said mathematical model G(s) of the hydroelectric group is described by the relation:

$$\dot{x} = Ax + Bu + B_w h_w$$

$$y = Cx,$$

$$x = \begin{pmatrix} X_h \\ X_e \end{pmatrix}, \qquad y = Y_e, \qquad u = \begin{pmatrix} \alpha \\ E_{fd} \end{pmatrix}$$

wherein $h_w$ is the head perturbation in the draft tube, alpha is the angle of a guide vane opening of the turbine,

$\mathbf{E}_{fd}$ is the excitation voltage of the generator, **x** is a state vector which concatenates a hydraulic state vector $X_h$ and an electric state vector $X_e$, **y** is an electric output vector $Y_e$, **u** are the input control variables and A, B and $B_\omega$ concatenated matrices.

9. Method of controlling an electric output of a hydroelectric group (11) according to claim 8, wherein said electrical measured values of the hydroelectric group (11) include an active power $\mathbf{P}_t$ and a voltage $\mathbf{E}_t$ of the generator (3).

10. Method of controlling an electric output of a hydroelectric group (11) according to claim 8 or 9, wherein the output control variables **u** comprise an angle $\alpha$ of a guide vane opening of the turbine (1) and an excitation voltage $E_{fd}$ of the generator (3).


**Patentansprüche**

1. Regler (10) für eine hydroelektrische Gruppe (11), wobei die hydroelektrische Gruppe (11) umfasst:

ein hydraulisches Teilsystem, das eine Turbine (1), einen Druckstollen und eine Saugrohrleitung (2), die sich entsprechend stromaufwärts und stromabwärts der Turbine (1) befinden, beinhalten; und
ein elektromechanisches Teilsystem, das einen Generator (3) und ein damit verbundenes elektrisches Netzwerk (5) umfasst;
wobei der Regler (10) eingerichtet ist, um nach Art eines geschlossenen Regelkreises von einer Messeinheit ein Ausgabesignal (50) zu empfangen, das elektrischen gemessenen Werten der hydroelektrischen Gruppe (11) zugeordnet ist, und Eingaberegelvariablen u zu erarbeiten, die der hydroelektrischen Gruppe (11) zuzuführen sind, und weiter umfassend einen Prozessor (101; 102), der eingerichtet ist, um die Eingaberegelvariablen u auf Grundlage eines mathematischen Modells G (s) der hydroelektrischen Gruppe (11) zu erarbeiten, das Gleichungen, die das hydraulische Teilsystem modellieren, und Gleichungen, die das elektromechanische Teilsystem modellieren, kombiniert,
**dadurch gekennzeichnet, dass**
das mathematische Modell der hydroelektrischen Gruppe (11) durch folgende Beziehung beschrieben ist:

$$\dot{x} = Ax + Bu + B_w h_w$$

$$y = Cx,$$

$$x = \begin{pmatrix} X_h \\ X_c \end{pmatrix}, \qquad y = Y_c, \qquad u = \begin{pmatrix} \alpha \\ E_{fd} \end{pmatrix}$$

wobei $h_w$ die Kopfpertubation des Saugrohrs ist, alpha der Winkel einer Führungsschaufelöffnung der Turbine ist, $E_{fd}$ die Anregungsspannung des Generators ist, x ein Zustandsvektor ist, der einen hydraulischen Zustandsvektor $x_h$ und einen elektrischen Zustandsvektor $x_e$ verknüpft, y ein elektrischer Ausgabevektor $Y_e$ ist, u die Eingaberegelvariablen sind und A, B und $B_w$ verknüpfte Matrizen sind.

2. Regler (10) nach Anspruch 1, wobei die elektrischen gemessenen Werte der hydroelektrischen Gruppe (11) eine aktive Leistung $P_t$ und eine Spannung $E_t$ des Generators (3) beinhalten.

3. Regler (10) nach Anspruch 1 oder 2, wobei die Eingaberegelvariablen u einen Winkel einer Führungsschaufelöffnung der Turbine (1) und eine Anregungsspannung $E_{fd}$ des Generators (3) umfassen.

4. Regler (10) nach Anspruch 3, wobei das Ausgabesignal (50) Varianzen der gemessenen elektrischen Werte der aktiven Leistung $P_t$ und der Spannung $E_t$ des Generators (3) gegen entsprechende Referenzwerte $r_{Pt}$ und $r_{Et}$ beinhaltet.

5. Regler (10) nach Anspruch 4, wobei das Ausgabesignal (50) dem Prozessor (101) zugeführt wird.

6. Regler (10) nach Anspruch 4, weiter umfassend:

eine erste Regelungseinheit (103), die eingerichtet ist, um als Eingabe eine erste Varianz $e_{Pt}$ der gemessenen aktiven Leistung $P_t$ gegen den Referenzwert $r_{Pt}$ zu empfangen und als Ausgabe den Regelwert zu erarbeiten; eine zweite Regelungseinheit (104), die eingerichtet ist, um als Eingabe zweite erste Varianz $e_{Et}$ der gemessenen Spannung $E_t$ gegen den Referenzwert $r_{Et}$ zu empfangen und als Ausgabe den Regelwert $E_{fd}$ zu erarbeiten; wobei der Prozessor (102) eingerichtet ist, um als Eingabe die gemessenen elektrischen Werte $P_t$, a, $E_t$ des Generators zu empfangen und ein Signal zurückzugeben, das geeignet ist, um die ersten und zweiten Varianzen $e_{Pt}$ und $e_{Et}$ anzupassen.

7. Hydroelektrische Gruppe (11), **dadurch gekennzeichnet, dass** sie einen Regler (10) nach einem der vorstehenden Ansprüche umfasst.

8. Verfahren zum Regeln einer elektrischen Ausgabe einer hydroelektrischen Gruppe (11), wobei die hydroelektrische Gruppe (11) umfasst:

   ein hydraulisches Teilsystem, das eine Turbine (1), einen Druckstollen und eine Saugrohrleitung (2), die sich entsprechend stromaufwärts und stromabwärts der Turbine (1) befinden, beinhaltet; und
   ein elektromechanisches Teilsystem, das einen Generator (3) und ein damit verbundenes elektrisches Netzwerk (5) umfasst; und
   einen Regler (10);
   wobei das Verfahren das Messen elektrischer Werte der hydroelektrischen Gruppe (11) beinhaltet, und Erarbeiten einer Eingaberegelvariablen u, die der hydroelektrischen Gruppe (11) nach Art eines geschlossenen Regelkreises zuzuführen ist, wobei das Erarbeiten der Ausgaberegelvariablen u auf einem mathematischen Modells G (s) der hydroelektrischen Gruppe basiert, das Gleichungen, die das hydraulische Teilsystem modellieren, und Gleichungen, die das elektromechanische Teilsystem modellieren, kombiniert,
   **dadurch gekennzeichnet, dass**
   das mathematische Modell G (s) der hydroelektrischen Gruppe durch folgende Beziehung beschrieben ist:

$$\dot{x} = Ax + Bu + B_w h_w$$

$$y = Cx,$$

$$x = \begin{pmatrix} X_h \\ X_c \end{pmatrix}, \qquad y = Y_c, \qquad u = \begin{pmatrix} \alpha \\ E_{fd} \end{pmatrix}$$

   wobei $h_w$ die Kopfpertubation des Saugrohrs ist, alpha der Winkel einer Führungsschaufelöffnung der Turbine ist, $E_{fd}$ die Anregungsspannung des Generators ist, x ein Zustandsvektor ist, der einen hydraulischen Zustandsvektor $x_h$ und einen elektrischen Zustandsvektor $x_e$ verknüpft, y ein elektrischer Ausgabevektor $Y_e$ ist, u die Eingaberegelvariablen sind und A, B und $B_w$ verknüpfte Matrizen sind.

9. Verfahren zum Regeln einer elektrischen Ausgabe einer hydroelektrischen Gruppe (11) nach Anspruch 8, wobei die elektrischen gemessenen Werte der hydroelektrischen Gruppe (11) eine aktive Leistung $P_t$ und eine Spannung $E_t$ des Generators (3) beinhalten.

10. Verfahren zum Regeln einer elektrischen Ausgabe einer hydroelektrischen Gruppe (11) nach Anspruch 8 oder 9, wobei die Ausgaberegelvariablen u einen Winkel einer Führungsschaufelöffnung der Turbine (1) und eine Anregungsspannung $E_{fd}$ des Generators (3) umfassen.

## Revendications

1. Dispositif de commande (10) pour groupe hydroélectrique (11), le groupe hydroélectrique (11) comprenant :

   un sous-système hydroélectrique comprenant une turbine (1), une conduite forcée et une conduite de tuyau d'aspiration (2) situés respectivement en amont et en aval de la turbine (1) ; et
   un sous-système électromécanique comprenant un générateur (3) et un réseau électrique (5) connecté à celui-ci ;

dans lequel le dispositif de commande (10) est configuré pour recevoir d'une unité de mesure, en boucle fermée, un signal de sortie (50) associé à des valeurs de mesure électriques du groupe électrique (11) et élaborer des variables de commande d'entrée u devant être fournies au groupe hydroélectrique (11), et comprenant en outre un processeur (101 ; 102) configuré pour élaborer lesdites variables de commande d'entrée u sur la base d'un modèle mathématique G(s) du groupe hydroélectrique (11) qui combine la modélisation par équations du sous-système hydraulique et la modélisation par équations du sous-système électromécanique **caractérisé en ce que** ledit modèle mathématique du groupe hydroélectrique (11) est décrit par la relation :

$$\dot{x} = Ax + Bu + B_w h_w$$

$$y = Cx,$$

$$x = \begin{pmatrix} X_h \\ X_e \end{pmatrix}, \qquad y = Y_e, \qquad u = \begin{pmatrix} \alpha \\ E_{fd} \end{pmatrix}$$

dans laquelle $h_w$ est la perturbation de tête dans le tuyau d'aspiration, alpha est l'angle d'ouverture d'une aube directrice de la turbine, $E_{fd}$ est la tension d'excitation du générateur, x est un vecteur d'état qui concatène un vecteur d'état hydraulique $X_h$ et un vecteur d'état électrique $X_e$, y est un vecteur de sortie électrique $Y_e$, u sont les variables de commande d'entrée et A, B et $B_w$ sont des matrices concaténées.

2. Dispositif de commande (10) selon la revendication 1, dans lequel lesdites valeurs électriques mesurées du groupe hydroélectrique (11) comprennent une puissance active $P_t$ et une tension $E_t$ du générateur (3).

3. Dispositif de commande (10) selon la revendication 1 ou 2, dans lequel les variables de commande d'entrée u comprennent un angle d'ouverture d'une aube directrice de la turbine (1) et une tension d'excitation $E_{fd}$ du générateur (3).

4. Dispositif de commande (10) selon la revendication 3, dans lequel ledit signal de sortie (50) comprend des écarts des valeurs électriques mesurées de la puissance active $P_t$ et de la tension $E_t$ du générateur (3) par rapport à des valeurs de référence respectives $r_{pt}$ et $r_{Et}$.

5. Dispositif de commande (10) selon la revendication 4, dans lequel ledit signal de sortie (50) est fourni au dit processeur (101).

6. Dispositif de commande (10) selon la revendication 4, comprenant en outre :

une première unité de commande (103) configurée pour recevoir en tant qu'entrée un premier écart $e_{Pt}$ de la puissance active mesurée $P_t$ par rapport à la valeur de référence $r_{Pt}$ et pour élaborer en tant que sortie ladite valeur de commande ;
une seconde unité de commande (104) configurée pour recevoir en tant qu'entrée un second écart $e_{Et}$ de la tension mesurée $E_t$ par rapport à la valeur de référence $r_{Et}$ et pour élaborer en tant que sortie ladite valeur de commande $E_{fd}$,
dans lequel ledit processeur (102) est configuré pour recevoir en tant qu'entrée lesdites valeurs électriques mesurées $P_t$, a, $E_t$ du générateur et retourner un signal apte à ajuster lesdits premier et second écarts $e_{Pt}$ et $e_{Et}$.

7. Groupe hydroélectrique (11) **caractérisé en ce qu'**il comprend un dispositif de commande (10) selon l'une quelconque des revendications précédentes.

8. Procédé pour la commande d'une sortie électrique d'un groupe hydroélectrique (11), le groupe hydroélectrique (11) comprenant :

un sous-système hydraulique comprenant une turbine (1), une conduite forcée et une conduite de tuyau d'aspiration (2) situés respectivement en amont et en aval de la turbine (1) ;

un sous-système électromécanique comprenant un générateur (3) et un réseau électrique (5) connecté à celui-ci ; et

un dispositif de commande (10) ;

le procédé comprenant la mesure de valeurs électriques du groupe hydroélectrique (11), et l'élaboration de variables de commande d'entrée u devant être fournies, en boucle fermée, au groupe hydroélectrique (11), dans lequel l'élaboration desdites variables de commande de sortie u est basée sur un modèle mathématique G(s) du groupe hydroélectrique qui combine la modélisation par équations du sous-système hydraulique et la modélisation par équations du sous-système mécanique

**caractérisé en ce que**

ledit modèle mathématique (G(s)) du groupe hydroélectrique est décrit par la relation :

$$\dot{x} = Ax + Bu + B_w h_w$$

$$y = Cx,$$

$$x = \begin{pmatrix} X_h \\ X_e \end{pmatrix}, \qquad y = Y_e, \qquad u = \begin{pmatrix} \alpha \\ E_{fd} \end{pmatrix}$$

dans laquelle $h_w$ est la perturbation de tête dans le tuyau d'aspiration, alpha est l'angle d'ouverture d'une aube directrice de la turbine, $E_{fd}$ est la tension d'excitation du générateur, x est un vecteur d'état qui concatène un vecteur d'état hydraulique $X_h$ et un vecteur d'état électrique $X_e$, y est un vecteur de sortie électrique $Y_e$, u sont les variables de commande d'entrée et A, B et $B_w$ sont des matrices concaténées.

9. Procédé pour la commande d'une sortie électrique d'un groupe hydroélectrique (11) selon la revendication 8, dans lequel lesdites valeurs électriques mesurées du groupe hydroélectrique (11) comprennent une puissance active $P_t$ et une tension $E_t$ du générateur (3).

10. Procédé pour la commande d'une sortie électrique d'un groupe hydroélectrique (11) selon la revendication 8 ou 9, dans lequel les variables de commande de sortie u comprennent un angle d'ouverture d'une aube directrice de la turbine (1) et une tension d'excitation $E_{fd}$ du générateur (3).

FIG.1

FIG.2

FIG.3

*FIG.4*

*FIG.5*

**FIG.6**

**FIG.6A**

FIG.7

*FIG.8*

FIG.9

FIG.10

**FIG.11**

EP 3 156 861 B1

*FIG.12*

**FIG.13**

*FIG.14*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. NICOLET ; J.-J. HEROU ; B. GREIVELDINGER ; P. ALLENBACH ; J.-J. SIMOND ; F. AVELLAN.** Methodology for risk assessment of part load resonance in Francis turbine power plant. *Proceedings IAHR Int. Meeting of WG on Cavitation and Dynamic Problems in Hydraulic Machinery and Systems,* June 2006
- **M. H. CHAUDHRY.** Applied Hydraulic Transients. Springer Verlag New York Inc, 2014
- **P. KUNDUR.** Power System Stability and Control. McGraw-Hill, 1994
- **G. ORELIND ; L. WOZNIAK ; J. MEDANIC ; T. WHITTEMORE.** Optimal PID gain schedule for :hydrogenerators - design and application. *Energy Conversion, IEEE Transactions on,* September 1989, vol. 4 (3
- **J. LANSBERRY ; L. WOZNIAK.** Adaptive hydrogenerator governor tuning with a genetic algorithm. *Energy Conversion, IEEE Transactions on,* March 1994, vol. 9 (1
- **O. MALIK ; Y. ZENG.** Design of a robust adaptive controller for a water turbine governing system. *Energy Conversion, IEEE Transactions on,* June 1995, vol. 10 (2
- **J. JIANG.** Design of an optimal robust governor for hydraulic turbine generating units. *Energy Conversion, IEEE Transactions on,* March 1995, vol. 10 (1
- **I. EKER ; M. TUMAY.** Robust multivariable-cascade governors for hydroturbine controls. *Electrical Engineering,* July 2002, vol. 84 (4
- **K. NATARAJAN.** Robust PID controller design for hydroturbines. *Energy Conversion, IEEE Transactions on,* September 2005, vol. 20 (3), 661-667
- **J. LANSBERRY ; L. WOZNIAK ; D. GOLDBERG.** Optimal hydrogenerator governor tuning with a genetic algorithm. *Energy Conversion, IEEE Transactions on,* December 1992, vol. 7
- Hydraulic turbine and turbine control : models for system dynamic studies. *Power Systems, IEEE Transactions on,* February 1992, vol. 7 (1

- **O. AKHRIF ; F.-A. OKOU ; L.-A. DESSAINT ; R. R. CHAMPAGNE.** Application of a multivariable feedback linearization scheme for rotor angle stability and voltage regulation of power systems. *Power Systems, IEEE Transactions on,* May 1999, vol. 14 (2), 620-628
- **M. WEIXELBRAUN ; H. RENNER ; O. KIRKELUTEN ; S. LOVLUND.** Damping low frequency oscillations with hydro governors. *PowerTech (POWERTECH), 2013 IEEE Grenoble,* June 2013, 1-6
- **J. MALLIK.** Reducing the effect of vortex rope oscillation on hydro units by power system stabilizer designed using genetic algorithm. *India Conference (INDICON), 2011 Annual IEEE,* December 2011, 1-4
- **A. PADOAN ; B. KAWKABANI ; A. SCHWERY ; C. RAMIREZ ; C. NICOLET ; J.- J. SIMOND ; F. AVELLAN.** Dynamical behaviour comparison between variable speed and synchronous machines with PSS. *Power Systems, IEEE Transactions on,* August 2010, vol. 25 (3
- **C. NICOLET ; F. AVELLAN ; P. ALLENBACH ; A. SAPIN ; J. SIMOND.** New tool for the simulation of transient phenomena in Francis turbine power plants. *Proceedings of the Hydraulic Machinery and Systems 21st IAHR Symposium,* September 2002
- **P. K. DOERFLER.** Evaluating 1D models for vortex-induced pulsation in Francis turbines. *3rd IAHR International Meeting of the Workgroup on Caviation and Dynamic Problems in Hydraulic Machinery and Systems,* October 2009
- **J. DOYLE ; K. GLOVER ; P. KHARGONEKAR ; B. FRANCIS.** State-space solutions to standard : H2 and H1 control problems. *Automatic Control, IEEE Transactions on,* August 1989, vol. 34 (8), 831-847
- **T. IWASAKI ; R. SKELTON.** All controllers for the general H1- control problem: LMI existence conditions and state space formulas. *Automatica,* 1994, vol. 30 (8), 1307-1317
- **K. ZHOU ; J. C. DOYLE.** Essentials Of Robust Control. Prentice Hall, 1999